# FASCICULE DE BREVET EUROPEEN

(11) **EP 1 166 635 B1**
(45) Date de publication et mention de la délivrance du brevet: **07.09.2005**
(21) Numéro de dépôt: 00202124.4
(22) Date de dépôt: 19.06.2000
(51) Int. Cl.: A21D 13/08, A21D 8/02, A23G 9/02

(54) **Biscuit feuilleté pour produit alimentaire réfrigéré ou congelé**
Mehrschichtiger Keks für gekühltes oder gefrorenes Lebensmittel
Multi-layered biscuit for frozen or refrigerated food product

(43) Date de publication de la demande: 02.01.2002
(73) Titulaire: SOCIETE DES PRODUITS NESTLE S.A., 1800 Vevey (CH)
(72) Inventeur: Tence, Jean-Francois, 60580 Coye la Foret (FR); Miskovic, Ana, 3190 La Paz Entre Rios (AR); Penet, Sylvie, 60430 Warluis (FR)
(74) Mandataire: Archambault, Jean

(56) Documents cités:
- EP-A- 0 104 743
- EP-A- 0 733 308
- EP-A- 0 954 977
- US-A- 3 537 866

## Description

L'invention concerne un procédé de fabrication d'un biscuit feuilleté mince et un gâteau, notamment un gâteau glacé contenant un tel biscuit.

Les produits à base de crème glacée du commerce dans lesquels se trouvent des biscuits entiers sont généralement des sandwiches. Les biscuits recouvrent les surfaces inférieures et supérieures de la crème glacée, en partie ou en totalité. Ces biscuits sont en général très secs pour leur conférer la rigidité et la résistance mécanique nécessaires à leur traitement sur une ligne de fabrication. Les faces des biscuits en contact avec la crème glacée ne sont généralement pas recouvertes d'une couche grasse servant de barrière au transfert d'humidité. En conséquence, ils s'humidifient rapidement et deviennent mous. Ce changement est avantageux lorsque l'on recherche un faible contraste de texture entre la crème glacée et le biscuit, ce qui est par exemple le cas dans un sandwich qui doit pouvoir être coupé sur toute son épaisseur sans écrasement de la couche centrale de crème glacée.

Récemment, on a vu apparaître sur le marché des gâteaux de crème glacée comprenant des biscuits craquants à titre d'inclusion. A l'opposé du sandwich, on recherche la permanenece du contraste de texture entre le biscuit et la crème glacée. Dans ce cas, le biscuit doit présenter une bien meilleure résistance à la reprise d'humidité que celui couramment utilisé dans la fabrication des sandwiches. Celà est d'autant plus nécessaire que les deux faces du biscuit sont au contact de la crème glacée.

On a proposé, par exemple dans EP-A-0 954 977 d'utiliser des biscuits de type oriental fabriqués à partir de pâte brik ou pâte à filo. Bien que de tels types de biscuits résolvent le problème du maintien de la croustillance en présence de crème glacée, leur fabrication, si elle est courante au plan artisanal, est complexe à mettre en oeuvre à l'échelle industrielle. Ces biscuits ont en sus l'inconvénient d'être soit fragiles, soit tendres et sont donc particulièrement délicats à manipuler.

Dans EP-A-0 509 566, on a proposé de résoudre le problème de la reprise d'humidité des biscuits à caractère croustillant destinés aux produits à base de pâte feuilletée garnis, par exemple du genre des "Apfelstrudel" en mettant à disposition une pâte composite. Celle-ci est constituée d'une couche de pâte feuilletée développée associée à une pâte du type brisée servant de couche d'ancrage pour une couche barrière d'humidité, les deux couches de pâte, préparées séparément étant ensuite co-laminées, puis cuites et la couche barrière étant ensuite déposée sur la couche d'ancrage.

Le but de l'invention est de fournir un biscuit de fabrication simple, notamment pour crème glacée à même de garder une texture particulièrement croustillante à l'entreposage à l'état congelé en présence de crème glacée ainsi que dans la chaîne de distribution et à la consommation.

L'invention concerne donc un procédé de fabrication d'un biscuit feuilleté mince pour produit alimentaire réfrigéré ou congelé , de structure laminée contenant 6 à 10 feuillets de pâte feuilletée, d'épaisseur au plus 2 mm, qui est croustillant sans avoir la fragilité et la tendreté d'une pâte feuilletée conventionnelle, dont le caractére croustillant est stable dans le temps et qui résiste à la reprise d'humidité même en présence d'une garniture humide,
dans lequel on prépare une pâte à feuilleter à partir de farine, d'eau, de sucre et de sel,
on pétrit la pâte, on la divise en blocs, on forme des bandes de pâte feuilletée,
on lamine les bandes en plusieurs passages jusqu'à une épaisseur d'au plus 2 mm, on découpe la pâte en morceaux,
on cuit les morceaux de pâte feuilletée laminée entre deux surfaces chauffées délimitant un entrefer de manière à empêcher son développement,
on refroidit les morceaux découpés et
on les enrobe d'une composition servant de barrière d'humidité.

Par rapport à une pâte feuilletée cuite développée fabriquée de manière classique, le présent biscuit se caractérise par une croustillance remarquable sans avoir la fragilité et la tendreté d'une telle pâte. De plus, ce caractère croustillant est stable dans le temps et le biscuit résiste à la reprise d'humidité aussi bien à l'état réfrigéré qu'à l'état congelé et ceçi même en présence d'une garniture humide.

Pour mettre en oeuvre le procédé, on prépare une pâte à feuilleter à partir de farine, d'eau, de sucre et de sel,
on pétrit la pâte, on la divise en blocs,
on traite les blocs dans un extrudeur pour former une bande,
on abaisse la bande, on la découpe en deux bandes d'égale largeur que l'on place l'une sur l'autre et entre lesquelles on applique au centre de la margarine de feuilletage et on lamine les bandes.

Après laminage, on découpe les bandes en morceaux.

On cuit ensuite les morceaux à plat dans un four entre des plaques chauffées maintenues à une certaine distance les unes des autres de manière à éviter le développement de la pâte tout en maintenant son caractère feuilleté. La cuisson peut avoir lieu pendant 10 à 30 min. à 170-220°C, de préférence à environ 200-220° C pendant environ 10 à 20 min.selon le dispositif de cuisson utilisé.

On peut également enrouler les morceaux autour d'un mandrin constituant un élément mâle, qui peut être par exemple de forme conique ou cylindrique pour leur donner une forme et les cuire entre deux éléments chauffés, l'un mâle et l'autre complémentaire femelle tout en maintenant un entrefer pour éviter le développement de la pâte feuilletée durant la cuisson.

Comme composition barrière on utilise avantageusement une base blanche contenant principalement une matière grasse, de préférence partiellement hydrogénée, avec le cas échéant minoritairement du lait écrémé en poudre et du sucre.

De préférence, la matière grasse utilisée a la propriété d'être solide à froid et de fondre rapidement dans la bouche et a à cet effet un pourcentage de matière grasse solide (index de matière grasse solide, SFI) bas, par exemple de l'ordre de 2 % en poids à 35° C et relativement élevé, par exemple > 60 % en poids à 10° C.

La composition d'enrobage peut avantageusement comprendre également un émulsifiant et un régulateur d'acidité.

L'invention concerne également un gâteau réfrigéré et notamment un gâteau glacé comprenant,
au moins une couche du biscuit décrit précédemment incluse(s) dans une masse de crème et
dans lequel, lorsqu'il y a plusieurs couches de biscuit, celles-ci sont séparées les unes des autres par des couches de crème.

Un tel gâteau peut ainsi ressembler à un mille-feuilles.

Dans le gâteau, les couches de biscuit peuvent être apparentes ou entièrement entourées d'une masse de crème.

La crème peut contenir des inclusions.

Le gâteau peut présenter sur sa face supérieure et /ou sur ses flancs des éléments décoratifs attractifs, par exemple sous forme de bandes, de damier, de lignes ondulées, en composition grasse, par exemple en chocolat ou en couverture ou en composition sucrée pour glaçage, aromatisée et colorée conférant un contraste visuel et gustatif avec la masse de crème.

De manière générale, le gâteau présente des caractéristiques assurant, de par la présence des couches de biscuit croustillant entre des couches de crème tendre un contraste de texture particulièrement apprécié des consommateurs.

Il est fabriqué par extrusion successive en continu de couches superposées assemblées de crème glacée et dépose de morceaux de biscuit entre les couches de crème glacée et décoration latérale et le cas échéant du dessus, puis découpe de l'assemblage en portions. La décoration peut avoir lieu sur la bande assemblée continue en même temps que l'extrusion avant découpe des portions ou sur les portions découpées.

Les exemples ci-après illustrent l'invention à l'aide des dessins annexés. Dans ces exemples, les parties et pourcentages sont pondéraux, sauf indication contraire.

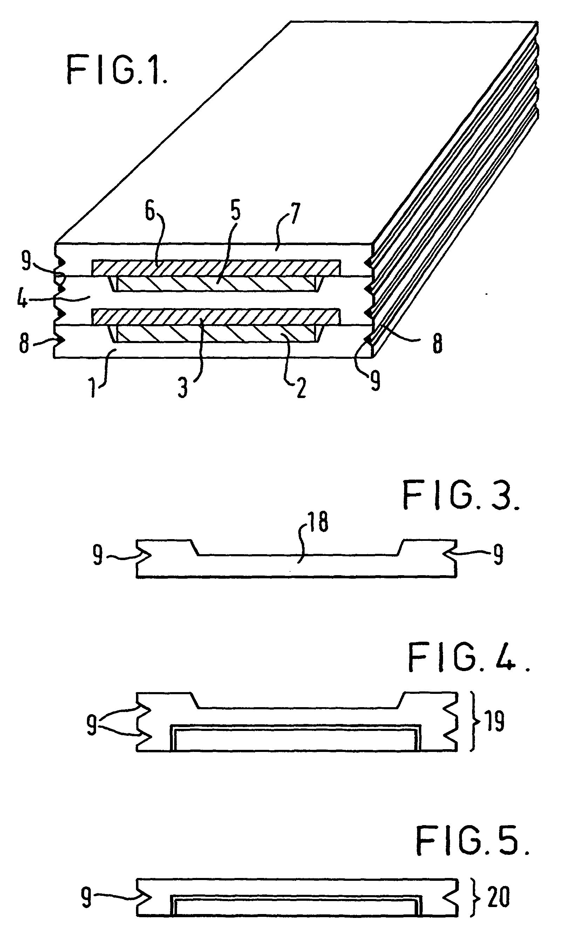

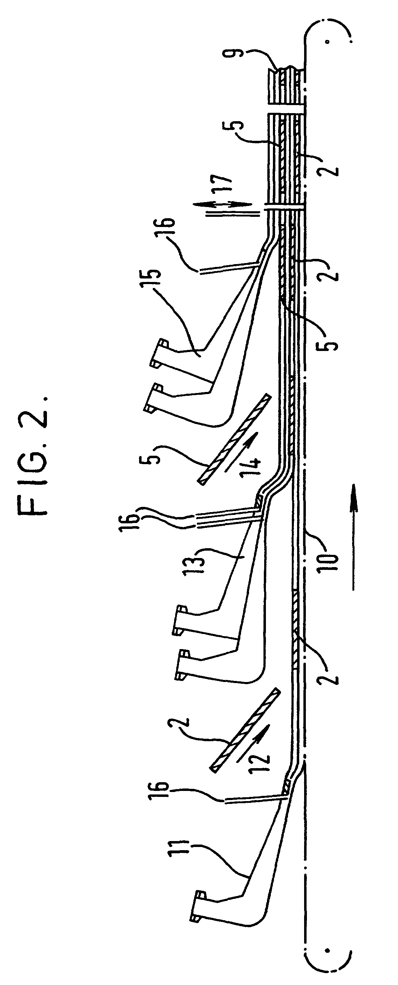

Aux dessins, la figure 1 est une vue schématique, en coupe transversale et en perspective d'un gâteau glacé selon l'invention, dans laquelle on a omis de montrer la décoration du dessus du gâteau pour des raisons de simplification,
La figure 2 est une vue schématique d'une ligne de fabrication du gâteau de la figure 1 et
Les figures 3, 4 et 5 sont des coupes montrant les formes des orifices d'ajutage des buses d'extrusion.

### Exemple 1

On fabrique un biscuit feuilletée selon une méthode dérivée de celle employée couramment en pâtisserie industrielle pour les gâteaux feuilletés.

### Pétrissage

On pétrit d'abord une pâte dans un pétrin spiral par charges de type KEMPER pendant 4 à 10 min., notamment environ 6 min. La composition type de la pâte, dont la formule est traditionnelle est la suivante:

| Ingrédient | % |
|---|---|
| Farine | 61,14 |
| Sucre | 30,57 |
| Sel | 0,98 |
| Eau | 7,31 |

La présence de sucre facilite le travail de laminage en diminuant l'élasticité de la pâte et permet le développement d'un arôme biscuit lors de la cuisson.

### Laminage

On utilise une ligne FRITSCH équipée d'un système de contrôle centralisé par ordinateur qui permet un réglage optimum des paramètres et assure une grande reproductibilité.

Après pétrissage, par charges, la pâte subit un repos de 15 min. environ, nécessaire à la relaxation du réseau de gluten qui facilite la mise en oeuvre en diminuant l'élasticité. On la divise ensuite en blocs de 10 à 15 kg avec lesquels on alimente un extrudeur à buse plate. Il en sort une bande de pâte de largeur 600 mm et d'épaisseur 20 mm. On abaisse cette bande à 16,5 mm et on coupe les bords de façon à en ramener la largeur à 620 mm. On peut recycler les chutes produites par la découpe au niveau de l'alimentation de l'extrudeur.

On découpe ensuite la bande de pâte en deux bandes égales de largeur 310 mm. On superpose les deux bandes de pâte et on applique de la margarine de feuilletage entre les deux bandes de pâte, au centre sur une largeur de 190 mm et une épaisseur de 9 mm. On obtient ainsi un rapport matière grasse/pâte de 0,14 environ.

Après deux passages successifs entre des rouleaux à satellites et des calibreurs, on ramène l'empilement précédent à une épaisseur totale de 5 à 6 mm. On plie la couche de pâte feuilletée ainsi obtenue une seule fois de manière que 4 à 5 plis se recouvrent en un endroit, ce qui correspont à 15 plis par mètre linéaire. La pâte feuilletée subit un troisième et dernier passage dans un ensemble de rouleaux à satellites et de calibreurs qui lui donnent l'épaisseur finale de 1,5 mm seulement. On la découpe longitudinalement et transversalement en morceaux de 60 x 113 mm qui après cuisson se rétracteront à 60 x 105 mm.

La manière particulière d'agencer les outils de laminage sur la ligne ainsi que l'utilisation d'une ligne de laminage à contrôle informatisé des paramètres permet d'obtenir des morceaux avant cuisson aussi minces que 1,5 mm. Si on utilise une ligne conventionnelle avec, par exemple 2 plis, l'épaisseur des morceaux avant cuisson peut difficilement être réglée à une valeur < 2,5 à 3 mm, ce qui limite le potentiel d'utilisation d'une telle pâte feuilletée dans un article de crème glacée.

### Cuisson

On cuit les morceaux de pâte feuilletée d'épaisseur 5-6 mm dans un moule constitué de deux plaques de 600 x 800 mm pourvues d'un revêtement anti-adhérent sur les faces en contact avec la pâte. L'entrefer, c'est à dire la distance entre les deux plaques est réglé à 2-2,5 mm de manière à empêcher la pâte de lever et de se développer pendant la cuisson. On obtient ainsi une galette de biscuit mince, dont l'épaisseur est celle de l'entrefer, et plat sur chaque face, qui est bien adapté à une utilisation ultérieure comme annexe ou inclusion dans de la crème glacée. En effet, il est rigide, assez solide pour être transporté et manipulé, craquant sous la dent et présente cependant une texture feuilletée à la dégustation.

Pour arriver à ce résultat, on cuit les morceaux de pâte dans un four linéaire à moules de type gaufrier ou dans un four rotatif muni d'un chariot supportant des ensembles moule et contre-moule. On peut également utiliser un four à bande téflonée en effectuant la cuisson entre deux bandes chauffées. On cuit les morceaux à 220° C environ pendant environ 10 à 20 min. selon le dispositif de cuisson utilisé, ce qui leur confère une belle teinte dorée et un caractère particulièrement croustillant.

### Enrobage

Les morceaux de biscuits feuilletés cuits ne sont pas utilisables en l'état comme annexe ou inclusion dans de la crème glacée. Sans protection, ils reprendraient trop rapidement de l'humidité et perdraient leur croustillance en 15 à 30 j.

On recouvre les biscuits d'une couche d'enrobage gras dont la plasticité est ajustée pour éviter qu'il ne se fendille entre - 30 et + 4° C. Typiquement, la partie lipidique de la composition d'enrobage est une matière grasse végétale partiellement hydrogénée dont le point de fusion est environ 32° C et dont la fraction solide (SFI, index de matière grasse solide) correspond à:
2 % à 35° C,
4% à 30° C,
35 % à 20° C et
65 % à 10° C.

La composition d'enrobage elle-même est un mélange de la matière grasse végétale ci-dessus, de poudre de lait écrémé et de sucre contenant un émulsifiant et un régulateur d'acidité.

On peut appliquer la composition d'enrobage blanche ci-dessus à l'état liquide par enrobage, trempage ou pulvérisation sur les morceaux en veillant à ce qu'ils soient parfaitement recouverts aussi bien sur leurs faces que sur leur tranche. On peut ajouter un colorant à la composition d'enrobage pour lui donner une couleur voisine de celle du biscuit.

### Exemple 2

Comme montré à la figure 1, le gâteau vu en coupe comprend, successivement de bas en haut,
Une couche 1 en forme de U de crème glacée à la vanille (Nata), ayant environ 5 mm d'épaisseur dans sa partie la plus mince,
A l'intérieur du U de la couche 1, un biscuit feuilleté en forme de galette enrobé 2, d'épaisseur environ 5 mm,
Une couche 3 de crème glacée au chocolat d'épaisseur 5 mm environ,
Une couche 4 en forme de H de crème glacée Nata, d'épaisseur environ 5 mm dans sa partie la plus mince, la partie inférieure du H contenant la couche 3,
Un biscuit feuilleté en forme de galette enrobé 5, d'épaisseur environ 5 mm, disposé dans la partie supérieure du H de la couche 4,
Une couche 6 de crème glacée au chocolat d'épaisseur 5 mm environ,
Une couche 7 en forme de U renversé de crème glacée Nata, ayant environ 5 mm d'épaisseur dans sa partie la plus mince, la couche 6 étant contenue dans la partie inférieure du U renversé de la couche 7,
Des bandes de décor au chocolat 8 disposées dans des rainures latérales 9 des couches 1, 4 et 7.

A la figure 2, on extrude les différentes couches à partir de buses disposées successivement et on les dépose sur un tapis transporteur 10. Ainsi, on forme et on dépose d'abord la couche 1 en U par la buse simple 11, on insére le biscuit 2 en 12, on co-extrude les couches 3 et 4 par la buse double 13, on insère le biscuit 5 en 14, puis on dépose les couches 6 et 7 par la buse double 15. Les ajutages des buses sont de formes telles qu'en même temps que les couches 1, 4 et 7 sont formées des rainures 9 sont réalisées dans leurs flancs. Les tubes 16 associés aux buses 11, 13 et 15 déposent les bandes décoratives 8. En 17, on découpe les portions par un fil chauffé.

Pour faciliter la compréhension, les figures 3, 4 et 5 montrent les formes des orifices d'ajutage 18, 19 et 20 des buses 11, 13 et 15 respectivement.

## Revendications

1. Procédé de fabrication d'un biscuit feuilleté mince pour produit alimentaire réfrigéré ou congelé , de structure laminée contenant 6 à 10 feuillets de pâte feuilletée, d'épaisseur au plus 2 mm, qui est croustillant sans avoir la fragilité et la tendreté d'une pâte feuilletée conventionnelle, dont le caractére croustillant est stable dans le temps et qui résiste à la reprise d'humidité même en présence d'une garniture humide,
dans lequel on prépare une pâte à feuilleter à partir de farine, d'eau, de sucre et de sel,
on pétrit la pâte, on la divise en blocs, on forme des bandes de pâte feuilletée,
on lamine les bandes en plusieurs passages jusqu'à une épaisseur d'au plus 2 mm, on découpe la pâte en morceaux,
on cuit les morceaux de pâte feuilletée laminée entre deux surfaces chauffées délimitant un entrefer de manière à empêcher son développement,
on refroidit les morceaux découpés et
on les enrobe d'une composition servant de barrière d'humidité.

2. Procédé selon la revendication 1, dans lequel on traite les blocs de pâte à feuilleter dans un extrudeur pour former une bande,
on abaisse la bande, on la découpe en deux bandes d'égale largeur que l'on place l'une sur l'autre et entre lesquelles on applique au centre de la margarine de feuilletage et on lamine les bandes.

3. Procédé selon la revendication 1, dans lequel après laminage et découpe des bandes en morceaux, on cuit ensuite les morceaux à plat dans un four entre des plaques chauffées maintenues à une certaine distance les unes des autres de manière à éviter le développement de la pâte tout en maintenant son caractère feuilleté, la cuisson ayant lieu pendant 10 à 30 min. à 170-220°C, de préférence à environ 200-220° C pendant environ 10 à 20 min.

4. Procédé selon la revendication 1, dans lequel on utilise comme composition servant de barrière d'humidité une composition grasse contenant principalement ou exclusivement une matière grasse partiellement hydrogénée, avec le cas échéant minoritairement du lait écrémé en poudre et du sucre.

5. Procédé selon la revendication 4, dans lequel la matière grasse utilisée dans la composition servant de barrière d'humidité a la propriété d'être solide à froid et de fondre rapidement dans la bouche et a à cet effet un pourcentage de matière grasse solide bas, notamment de l'ordre de 2 % en poids à 35° C et relativement élevé, notamment > 60 % en poids à 10° C.

6. Procédé selon la revendication 1, dans lequel la composition servant de barrière d'humidité comprend également un émulsifiant et un régulateur d'acidité.

7. Gâteau réfrigéré ou glacé comprenant,
au moins une couche d'un biscuit obtenu par le procédé selon la revendication 1 incluse(s) dans une masse de crème et dans lequel, lorsqu'il y a plusieurs couches de biscuit, celles-ci sont séparées les unes des autres par des couches de crème.

8. Gâteau glacé selon la revendication 7, présentant sur sa face supérieure et /ou sur ses flancs des éléments décoratifs attractifs, notamment sous forme de bandes, de damier, de lignes ondulées, en composition grasse, notamment en chocolat ou en couverture ou en composition sucrée pour glaçage, aromatisée et colorée conférant un contraste visuel et gustatif avec la masse de crème.

## Patentansprüche

1. Verfahren zum Herstellen eines blättrigen dünnen Biskuits für ein gekühltes oder gefrorenes LebensmittelProdukt mit Lagen-Struktur, aufweisend 6 bis 10 Lagen lagenförmigen Teiges von höchstens 2 mm Dicke, welcher knusprig ist, ohne die Zerbrechlichkeit und die Zartheit einer herkömmlichen blätterigen Teigware aufzuweisen, dessen knuspriger Charakter zeitlich stabil ist, und welcher der Wiederaufnahme von Feuchtigkeit selbst bei Anwesenheit eines feuchten Belages widersteht,
wobei ein in Blattform zu bringender Teig aus Mehl, Wasser, Zucker und Salz bereitet wird,
der Teig geknetet wird, er in Blöcke unterteilt wird, Streifen von blättrigem Teig gebildet werden, die Streifen in mehreren Durchläufen bis zu einer Dicke von höchstens 2 mm laminiert werden, der Teig in Stücke geschnitten wird,
die laminierten Stücke von blättrigem Teig zwischen zwei erwärmten Flächen, welche einen Luftspalt begrenzen, derart gebacken werden, dass sein Aufgehen begrenzt wird, die geschnittenen Stücke ausgekühlt werden und
sie mit einer Komposition umhüllt werden, welche als Feuchtigkeits-Barriere dient.

2. Verfahren gemäß Anspruch 1, wobei die Blöcke von in Blattform zu bringendem Teig in einem Extruder behandelt werden, um einen Streifen zu bilden,
der Streifen abgesenkt wird, er in zwei Streifen gleicher Größe geschnitten wird, welche übereinander angeordnet werden, und zwischen welche in der Mitte Margarine für in-Blattform-Bringen-Zwecke appliziert wird, und die Streifen laminiert werden.

3. Verfahren gemäß Anspruch 1, wobei nach dem Laminieren und Schneiden der Streifen in Stücke, die Teig-Stücke anschließend in einem Ofen zwischen erwärmten Platten durchgebacken werden, zwischen welchen ein bestimmter Abstand derart aufrechterhalten wird, dass das Aufgehen des Teiges verhindert wird, wobei insgesamt sein blättriger Charakter beibehalten wird, wobei das Backen während 10 bis 30 Minuten bei 170-220°C, bevorzugt bei ungefähr 200-220°C während ungefähr 10 bis 20 Minuten stattfindet.

4. Verfahren gemäß Anspruch 1, wobei als Komposition, welche als Feuchtigkeits-Barriere dient, eine fetthaltige Komposition verwendet wird, welche hauptsächlich oder ausschließlich ein fetthaltiges, teilweise hydriertes Material enthält, mit gegebenenfalls kleinen Beimengungen von entrahmter Milch in Pulverform und Zucker.

5. Verfahren gemäß Anspruch 4, wobei das in der Komposition verwendete fetthaltige Material, welches als Feuchtigkeits-Barriere dient, die Eigenschaft hat, in der Kälte fest zu sein, und im Mund schnell zu schmelzen, und zu diesem Zweck einen niedrigen Prozent-Anteil festen fetthaltigen Materials aufweist, insbesondere in der Größenordnung von 2 Gewichts-% bei 35°C und relativ hoch, insbesondere >60 Gewichts-% bei 10°C.

6. Verfahren gemäß Anspruch 1, wobei die Komposition, welche als Feuchtigkeits-Barriere dient, außerdem einen Emulgator und einen Säure-Regulator aufweist.

7. Gekühlter oder gefrorener Keks, umfassend,
wenigstens eine Schicht eines mittels des Verfahrens gemäß Anspruch 1 erhaltenen Biskuits, eingeschlossen in einer Creme-Masse, wobei, falls es mehrere Biskuit-Lagen gibt, diese voneinander durch Creme-Lagen getrennt sind.

8. Gefrorener Keks gemäß Anspruch 7, auf seiner oberen Fläche und/oder an seinen Seiten attraktive dekorative Elemente aufweisend, insbesondere in Form von Streifen, Schachbrett, Wellen-Linien, aus fetthaltiger Komposition, insbesondere aus Schokolade oder aus Kuvertüre oder aus zuckerhaltiger Komposition als Guss, aromatisiert und eingefärbt, wodurch sie einen visuellen und geschmacklichen Kontrast zu der Creme-Masse aufweisen.

## Claims

1. Method for producing a thin layered biscuit for a refrigerated or frozen food product, with a laminated structure containing 6 to 10 layers of puff pastry, with a thickness of no more than 2 mm, that is crisp without having the fragility and softness of a conventional puff pastry, of which the crisp character is stable with time and that withstands the uptake of moisture even in the presence of a moist filling,
wherein a dough to be layered is prepared from flour, water sugar and salt,
the dough is kneaded and divided into blocks and strips of puff pastry dough are formed,
the strips are rolled in several passes to a thickness of no more than 2 mm,
the dough is cut into pieces,
the pieces of rolled puff pastry dough are baked between two heated surfaces delimiting an air gap so as to prevent the dough rising,
the cut pieces are cooled and
they are enrobed with a composition acting as a moisture barrier.

2. Method according to claim 1, wherein the blocks of dough to be layered are treated in an extruder to form a strip, the strip is reduced in thickness and cut into two strips of equal width that are placed one on the other and between which puff pastry margarine is applied in the centre, and the strips are rolled.

3. Method according to claim 1, wherein, after rolling and cutting the strips into pieces, the pieces are baked flat in an oven between heated plates held at a certain distance from each other so as to prevent the dough rising while maintaining its layered character, baking being carried out for 10 to 30 min. at 170-220°C, preferably at approximately 200-220°C, for approximately 10 to 20 min.

4. Method according to claim 1, wherein a fatty composition is used as a composition acting as a moisture barrier mainly or exclusively containing a partially hydrogenated fat, with optionally a minor amount of powdered skimmed milk and sugar.

5. Method according to claim 4, wherein the fat used in the composition acting as a moisture barrier has the property of being solid when cold and of melting rapidly in the mouth, and to this end has a low percentage of solid fat, in particular of the order of 2% by weight at 35°C, and a relatively high percentage, in particular > 60% by weight at 10°C.

6. Method according to claim 1, wherein the composition acting as a moisture barrier also includes an emulsifier and an acidity regulator.

7. Refrigerated or frozen gateau comprising at least one layer of a biscuit obtained by the method according to claim 1 enclosed in a mass of cream and wherein, when there are several biscuit layers, these are separated from each other by layers of cream.

8. Frozen gateau according to claim 7, having on its upper face and/or on its sides attractive decorative elements, in particular in the form of strips, chequered designs, undulating lines, made of a fatty composition, in particular made of chocolate or a coating or a sweet icing composition, that is flavoured and coloured, providing a visual and gustative contrast to the cream mass.
